# FASCICULE DE BREVET EUROPEEN

(11) **EP 2 914 555 B1**
(45) Date de publication et mention de la délivrance du brevet: **15.08.2018**
(21) Numéro de dépôt: 13801619.1
(22) Date de dépôt: 29.10.2013
(51) Int. Cl.: C03C 3/083, C03C 3/089, C03C 3/091, C03C 4/02, H05B 6/12

(54) **PLAQUE EN VERRE POUR DISPOSITIF DE CUISSON PAR INDUCTION**
GLASPLATTE FÜR EINE INDUKTIONSKOCHVORRICHTUNG
GLASS PLATE FOR INDUCTION COOKING DEVICE

(30) Priorité: 30.10.2012 FR 1260354
(43) Date de publication de la demande: 09.09.2015
(73) Titulaire: Eurokera S.N.C., 02400 Château-Thierry (FR)
(72) Inventeur: PLEVACOVA, Kamila, F-75017 Paris (FR); BRUNET, Edouard, F-75012 Paris (FR); LECOMTE, Emmanuel, F-02400 Nesles La Montagne (FR)
(74) Mandataire: Saint-Gobain Recherche
(86) Numéro de dépôt international: PCT/FR2013/052584
(87) Numéro de publication internationale: WO 2014/068242

(56) Documents cités:
- EP-A1- 0 705 800
- EP-A2- 1 081 107
- WO-A1-2012/001300
- WO-A1-2012/080672
- US-B2- 7 501 365

## Description

L'invention se rapporte au domaine des dispositifs de cuisson par induction.

Les dispositifs de cuisson par induction comprennent au moins un inducteur disposé sous une plaque en vitrocéramique. Ces dispositifs sont encastrés dans un plan de travail ou dans le bâti d'une cuisinière. La plaque sert de support aux ustensiles de cuisson (casseroles, poêles...), lesquels sont chauffés grâce au courant électrique induit en leur sein par le champ magnétique généré par les inducteurs. Les vitrocéramiques d'aluminosilicate de lithium sont employées à cet effet grâce à leur résistance au choc thermique, conséquence de leur coefficient de dilatation thermique nul ou quasi-nul. Les vitrocéramiques sont produites en soumettant à un traitement thermique à haute température des plaques de verre d'aluminosilicate de lithium, traitement qui génère au sein de la plaque des cristaux de structure beta-quartz ou beta-spodumène dont le coefficient de dilatation thermique est négatif. Le matériau vitrocéramique est donc constitué de cristaux reliés par une phase vitreuse résiduelle ; il n'est donc plus un verre.

Ces plaques en vitrocéramique, par exemple commercialisées par la Demanderesse sous la marque KeraBlack, présentent généralement une coloration sombre grâce à l'ajout de vanadium, coloration qui permet de dissimuler les parties internes de la plaque.

Il a été proposé dans la demande WO 2012/080672 d'utiliser des plaques en verre d'aluminosilicate de lithium dans ce type de dispositifs. Afin de dissimuler les inducteurs, le câblage électrique, ainsi que les circuits de commande et de contrôle du dispositif de cuisson, il est proposé de munir la plaque de revêtements opaques, ou bien d'introduire dans la plaque de verre des agents de coloration afin de réduire la transmission lumineuse de la plaque.

Les dispositifs de cuisson par induction intègrent également des moyens d'affichage, par exemple par le biais de diodes électroluminescentes (LED). Si les LED utilisées pour cette application ont souvent été rouges pendant de nombreuses années, il est maintenant proposé des LED, ou plus généralement des moyens d'affichage, émettant dans le bleu, le vert, ou encore le blanc. Le rendu des couleurs de ces dispositifs émetteurs de lumière vu au travers de la plaque devient alors un problème crucial.

L'invention a pour but de proposer des plaques de verre pour dispositifs de cuisson par induction qui permettent de dissimuler les éléments internes du dispositif tout en présentant une teinte proche de celle des vitrocéramiques sombres actuellement commercialisées. Un autre but de l'invention est d'assurer en outre une bonne visualisation des afficheurs sans distorsion majeure des couleurs, notamment des afficheurs blancs.

A cet effet, l'invention a pour objet une plaque en verre renforcé de type aluminosilicate de lithium, borosilicate ou alumino-borosilicate pour un dispositif de cuisson par induction, dont la composition chimique comprend les colorants suivants, dans une teneur variant dans les limites pondérales ci-après définies :

| | |
|---|---|
| Fe₂O₃ (fer total) | 0,8 à 1,8% |
| CoO | 0,02 à 0,06% |
| Se | 0 à 0,005% |
| Cr₂O₃ | 0 à 0,1%. |

L'invention a également pour objet un dispositif de cuisson par induction comprenant au moins un inducteur disposé sous une plaque en verre selon l'invention.

Les inventeurs ont pu mettre en évidence que le choix de ces agents colorants, dans la gamme de teneurs revendiquée, permettait de bien dissimuler les éléments internes du dispositif en présentant un aspect très proche de celui des plaques vitrocéramiques colorées à l'aide de vanadium. Il s'est également avéré que ce choix de colorants ne créait généralement pas de distorsion significative des couleurs. Les afficheurs bleus, verts, rouges ou encore blancs, sont alors parfaitement rendus, malgré la faible transmission lumineuse de la plaque.

On entend par « verre renforcé », le fait que le verre présente des contraintes en compression en surface, dues à un renforcement, de préférence thermique ou chimique.

Le renforcement thermique est aussi appelé trempe ou durcissement. Il consiste à réchauffer le verre au-delà de sa température de transition vitreuse, puis à le refroidir brutalement, généralement au moyen de buses envoyant de l'air sur la surface du verre. Comme la surface se refroidit plus vite que le coeur du verre, des contraintes en compression se forment à la surface de la plaque de verre, équilibrées par des contraintes en tension au coeur de la plaque. Le renforcement chimique, parfois appelé trempe chimique, est un traitement mettant en oeuvre un échange ionique. La substitution superficielle d'un ion de la plaque de verre (généralement un ion alcalin tel que le sodium ou le lithium) par un ion de rayon ionique plus grand (généralement un ion alcalin, tel que le potassium ou le sodium) permet de créer en surface de la plaque de verre des contraintes résiduelles de compression, jusqu'à une certaine profondeur. De préférence, le verre est renforcé thermiquement.

Afin de présenter une résistance thermomécanique optimale permettant aux plaques de verre de résister aux tests d'utilisation les plus sévères, le verre présente de préférence l'une au moins des caractéristiques suivantes :
- le rapport c/a du verre avant renforcement est d'au plus 3,0 après indentation Vickers sous une charge de 1kg, c étant la longueur des fissures radiales et a étant la demi-diagonale de l'empreinte Vickers,
- le rapport σ/(e.E.α) est d'au moins 20 K.mm⁻¹, voire 25 ou 30 K.mm⁻¹, σ étant la contrainte maximale générée au coeur du verre par le renforcement en Pa, e étant l'épaisseur du verre en mm, E étant le module de Young en Pa et α étant le coefficient de dilatation thermique linéaire du verre en K⁻¹.

L'épaisseur de la plaque est de préférence d'au plus 4,5 mm, notamment 4 mm et même 3,5 mm. L'épaisseur est généralement d'au moins 2 mm. La plaque en verre présente de préférence une dimension latérale d'au moins 0,5 m, voire 0,6 m. La dimension la plus grande est généralement d'au plus 1,50 m. Le nombre d'inducteurs est de préférence d'au moins 2, notamment 3 ou 4. C'est en effet pour ce type de dispositifs que le choix du verre devient tout particulièrement crucial.

Le verre de la plaque selon l'invention présente de préférence au moins une des 6 propriétés suivantes, selon toutes les combinaisons possibles :
1. le produit E.α du module de Young (en Pa) et du coefficient de dilatation thermique linéaire du verre (en K⁻¹) est compris entre 0,1 et 0,8 MPa.K⁻¹, notamment entre 0,2 et 0,5 MPa.K⁻¹, en particulier entre 0,2 et 0,4 MPa.K⁻¹. Un produit E.α trop faible rend la trempe thermique plus difficile, tandis qu'un produit E.α trop élevé diminue la résistance au choc thermique.
2. la température inférieure de recuit du verre est d'au moins 500°C, notamment 600°C et même 630°C. Cette température est de préférence d'au plus 800°C, notamment 700°C. Fréquemment appelée « Strain point » dans la technique, elle correspond à la température à laquelle la viscosité du verre est de 10^{14,5} Poises (1 Poise = 0,1 Pa.s). Des températures inférieures de recuit élevées permettent d'éviter toute détrempe du verre pendant le fonctionnement du dispositif de cuisson.
3. le coefficient de dilatation thermique linéaire du verre est d'au plus 50.10⁻⁷/K, notamment est compris entre 30 et 45.10⁻⁷/K, voire entre 32 (ou 35) et 45.10⁻⁷/K. Les coefficients de dilatation thermique élevés ne permettent pas d'obtenir une résistance au choc thermique suffisante. En revanche, un coefficient de dilatation thermique trop faible rend difficile l'obtention d'un renforcement suffisant.
4. le rapport c/a du verre avant renforcement est d'au plus 2,8, notamment 2,7, ou 2,5, et même 0,5, voire 0,2, ou encore 0,1. Ce rapport est même de préférence nul. De manière surprenante, cette propriété, pourtant mesurée avant renforcement, s'est révélée avoir un impact de première importance sur la résistance des plaques durant le fonctionnement effectif des dispositifs de cuisson selon l'invention.
5. le rapport σ/(e.E.α) du verre est d'au moins 20, notamment 30 K.mm⁻¹. Le rapport σ/(e.E.α) est normalement d'au plus 200 K.mm⁻¹, voire 100 K.mm⁻¹. Cette propriété s'est révélée avoir un impact important pour éliminer le risque de casse de la plaque pendant le fonctionnement du dispositif de cuisson.
6. la contrainte maximale générée au coeur du verre par le renforcement est de préférence d'au moins 20 MPa, notamment 25 ou 30 MPa, et même 40 MPa.

Afin d'optimiser sa résistance thermomécanique, le verre utilisé selon l'invention présente de préférence toutes ces caractéristiques préférées en combinaison. D'autres combinaisons sont possibles, notamment les combinaisons des propriétés 1+2, 1+3, 1+4, 1+5, 1+6, 2+3, 2+4, 2+5, 2+6, 3+4, 3+5, 3+6, 4+5, 4+6, 5+6, 1+2+3, 1+2+4, 1+2+5, 1+2+6, 1+3+4, 1+3+5, 1+3+6, 1+4+5, 1+4+6, 1+5+6, 1+2+3+4, 1+2+3+5, 1+2+3+6, 1+3+4+5, 1+3+4+6, 1+3+5+6, 1+4+5+6, 1+2+3+4+5, 1+2+3+4+6, 1+2+3+5+6, 1+2+4+5+6, 1+3+4+5+6.

En particulier, le verre utilisé est de préférence trempé thermiquement et présente préférentiellement les caractéristiques suivantes : son épaisseur est d'au plus 4,5 mm, le rapport c/a est d'au plus 2,5, et le rapport σ/(e.E.α) est d'au moins 20 K.mm⁻¹, voire 30 K.mm⁻¹.

Le coefficient de dilatation thermique linéaire est mesuré selon la norme ISO 7991 :1987 entre 20 et 300°C et exprimé en K⁻¹. La température inférieure de recuit est mesurée selon la norme ISO 7884-7 :1987.

Le module de Young (ou module d'élasticité) E est mesuré par flexion quatre points sur une éprouvette de verre de 100*10*4 mm³. Les deux appuis inférieurs sont situés à une distance de 90 mm l'un de l'autre, tandis que les deux appuis supérieurs sont situés à une distance de 30 mm l'un de l'autre. Les appuis supérieurs sont centrés par rapport aux appuis inférieurs. La force est appliquée au milieu de l'éprouvette, par au-dessus. La déformation est mesurée à l'aide d'une jauge de contrainte, et le module de Young est calculé comme étant le rapport entre la contrainte et la déformation. L'incertitude de mesure est généralement de l'ordre de 3% en relatif. Le module de Young est exprimé en Pa.

Le rapport c/a est mesuré comme détaillé ci-après. Un indenteur Vickers de type TestWell FM7 est chargé à P=1000 g à température ambiante, pendant 30 s, la vitesse de descente étant égale à 50 µm/s. Les mesures de a (demi-diagonale de l'empreinte Vickers) et c (longueur des fissures radiales, partant des coins de l'empreinte, dans la direction de la diagonale) sont effectuées à l'aide d'un microscope optique 1 h après l'expérience. Le résultat est la moyenne arithmétique issue d'un ensemble de 10 mesures.

La contrainte à coeur σ (contrainte maximale en tension générée au coeur du verre par le renforcement) est mesurée par photoélasticimétrie à l'aide d'un polariscope, par exemple le polariscope commercialisé par la société GlasStress Ltd sous la dénomination SCALP-04. A partir d'une plaque, on mesure généralement la contrainte au niveau du centre de la plaque (2 mesures), et au niveau des 4 coins, à au moins 10 cm des bords. Le résultat est une moyenne de ces 6 mesures, exprimé en Pa.

Les colorants peuvent être ajoutés à différents types de matrices verrières, du type aluminosilicate de lithium, borosilicate, ou encore alumino-borosilicate, lesquelles présentent des propriétés thermomécaniques et de résistance à l'endommagement les rendant aptes à être utilisées dans de bonnes conditions dans des dispositifs de cuisson par induction.

Selon un premier mode de réalisation préféré, la composition chimique du verre est du type aluminosilicate de lithium.

Dans ce cas, la composition chimique du verre comprend de préférence de la silice SiO₂ en une teneur pondérale allant de 49 à 75%, de l'alumine Al₂O₃ en une teneur pondérale allant de 15 à 30% et de l'oxyde de lithium Li₂O en une teneur pondérale allant de 1 à 8%.

La composition chimique du verre comprend avantageusement les constituants suivants, variant dans les limites pondérales ci-après définies :

| | |
|---|---|
| SiO₂ | 49-75%, notamment 52-75% |
| Al₂O₃ | 15-30%, notamment 18-27% |
| Li₂O | 1-8%, notamment 2,5-5,5% |
| K₂O | 0-5%, notamment 0-3% |
| Na₂O | 0-5%, notamment 0-3% |
| ZnO | 0-5%, notamment 0-3,5% |
| MgO | 0-5%, notamment 0-3% |
| CaO | 0-5%, notamment 0-2,5% |
| BaO | 0-5%, notamment 0-3,5% |
| SrO | 0-5%, notamment 0-2% |
| TiO₂ | 0-6%, notamment 0-3% |
| ZrO₂ | 0-5%, notamment 0-3% |
| P₂O₅ | 0-10%, notamment 0-8% |
| B₂O₃ | 0-5%, notamment 0-3%. |

La silice (SiO₂) est le principal oxyde formateur du verre. De fortes teneurs vont contribuer à augmenter la viscosité du verre au-delà de ce qui est acceptable, tandis que des teneurs trop faibles vont augmenter le coefficient de dilatation thermique. L'alumine (Al₂O₃) contribue également à augmenter la viscosité du verre et à diminuer son coefficient de dilatation. Son effet est bénéfique sur le module de Young.

L'oxyde de lithium (Li₂O) est de préférence le seul oxyde alcalin présent dans la composition, mis à part les impuretés inévitables. De trop fortes teneurs augmentent la tendance du verre à dévitrifier. Les oxydes alcalins permettent de fluidifier le verre et donc de faciliter sa fusion et son affinage, mais la soude et la potasse ont pour désavantage d'augmenter le coefficient de dilatation thermique du verre et de réduire sa température inférieure de recuit. L'oxyde de lithium permet de maintenir de faibles coefficients de dilatation thermique par rapport aux autres oxydes alcalins. Il a également été observé que l'oxyde de lithium permettait d'obtenir des valeurs du rapport c/a exceptionnellement faibles, même dans certains cas des valeurs nulles, particulièrement bénéfiques dans l'application visée. La forte mobilité de l'ion lithium, due à sa faible taille, pourrait être à l'origine de cette propriété.

Les oxydes alcalino-terreux ainsi que l'oxyde de baryum (BaO) sont utiles pour faciliter la fusion du verre et son affinage, de par leur effet de réduction de la viscosité à haute température.

Les oxydes de magnésium et de zinc se sont révélés particulièrement utiles pour obtenir de faibles rapports c/a. En revanche, les oxydes de calcium, de bore, de strontium et de baryum ont tendance à augmenter ce rapport, si bien que leur teneur est préférentiellement réduite. De préférence, la composition du verre est exempte de B₂O₃.

Les oxydes de titane et de zirconium ne sont pas obligatoires, mais leur présence contribue à augmenter le module de Young du verre. La somme de leurs teneurs pondérales est donc avantageusement d'au moins 1%, voire 2%. L'oxyde de titane pouvant conduire à l'obtention de couleurs jaunes ou ambres, sa teneur est toutefois avantageusement d'au plus 1%, voire 0,5%, et même nulle, sauf impuretés inévitables.

Selon un deuxième mode de réalisation préféré, la composition du verre est du type borosilicate.

Dans ce cas la composition chimique du verre comprend de préférence de la silice SiO₂ en une teneur pondérale allant de 70 à 85%, de l'oxyde de bore B₂O₃ en une teneur pondérale allant de 8% à 20% et au moins un oxyde alcalin, la teneur pondérale totale en oxydes alcalins allant de 1 à 10%.

La composition chimique du verre borosilicate comprend de préférence (ou consiste essentiellement en) les constituants suivants, variant dans les limites pondérales ci-après définies :

| | |
|---|---|
| SiO₂ | 70-85%, notamment 75-85% |
| B₂O₃ | 8-16%, notamment 10-15 % ou 9-12% |
| Al₂O₃ | 0-5 %, notamment 0-3% ou 2-5% |
| K₂O | 0-2%, notamment 0-1% |
| Na₂O | 1-8 %, notamment 2-6%. |

De préférence, la composition peut en outre comprendre au moins un des oxydes suivants : MgO, CaO, SrO, BaO, ZnO, en une teneur pondérale totale allant de 0 à 10%, notamment CaO en une teneur pondérale allant de 1 à 2%.

Selon un troisième mode de réalisation préféré, la composition du verre est du type alumino-boro-silicate, notamment dépourvu d'oxydes alcalins.

Dans ce cas la composition chimique du verre comprend de préférence de la silice SiO₂ en une teneur pondérale allant de 45% à 68%, de l'alumine Al₂O₃ en une teneur pondérale allant de 8 à 20%, de l'oxyde de bore B₂O₃ en une teneur pondérale allant de 4% à 18%, des oxydes alcalino-terreux choisis parmi MgO, CaO, SrO et BaO, en une teneur totale allant de 5 à 30%, la teneur pondérale totale en oxydes alcalins ne dépassant pas 10%, notamment 1%, voire 0,5%. Par « dépourvu d'oxydes alcalins », on entend que la teneur totale pondérale en oxydes alcalins est d'au plus 1%, notamment 0,5%, et même 0,1%.

La composition chimique du verre alumino-borosilicate comprend de préférence (ou consiste essentiellement en) les constituants suivants, variant dans les limites pondérales ci-après définies :

| | |
|---|---|
| SiO₂ | 45-68 %, notamment 55-65% |
| Al₂O₃ | 8-20%, notamment 14-18% |
| B₂O₃ | 4-18%, notamment 5-10% |
| RO | 5-30 %, notamment 5-17% |
| R₂O | au plus 10%, notamment 1%. |

Comme il est d'usage dans la technique, l'expression « RO » désigne les oxydes alcalino-terreux MgO, CaO, SrO et BaO, tandis que l'expression « R₂O » désigne les oxydes alcalins. De telles composition permettent d'obtenir des rapports c/a très faibles, notamment d'au plus 1, voire 0, 6.

L'expression « consiste essentiellement en » doit être comprise en ce sens que les oxydes précités constituent au moins 96%, voire 98% du poids du verre. La composition comprend usuellement des additifs servant à l'affinage du verre. Les agents d'affinage sont typiquement choisis parmi les oxydes d'arsenic, d'antimoine, d'étain, de cérium, les halogènes, les sulfures métalliques, notamment le sulfure de zinc. La teneur pondérale en agents d'affinage est normalement d'au plus 1%, de préférence entre 0,1 et 0,6%. La composition comprend également les colorants définis plus précisément ci-après.

Les paragraphes qui suivent décrivent plus en détail l'influence des colorants, et valent pour tous les types de matrices verrières décrites précédemment.

La teneur pondérale en Fe₂O₃ (fer total) varie de préférence de 0,9 à 1,7%, notamment de 1,0 à 1,6%, voire de 1,1 à 1,4%. L'oxyde de fer peut être présent sous forme ferrique ou ferreuse. L'expression « Fe₂O₃ (fer total) » doit donc se comprendre comme désignant la totalité de l'oxyde de fer présent dans le verre (aussi bien sous forme ferreuse que ferrique), mais exprimée sous la forme Fe₂O₃. De préférence, le rédox, défini comme étant le rapport entre la teneur en fer ferreux (exprimé sous la forme FeO) et la teneur en fer total (exprimé sous la forme Fe₂O₃), est compris entre 0,15 et 0,45, notamment entre 0,18 et 0,39, voire entre 0,20 et 0,35. Des teneurs trop élevées en fer vont entraîner une opacification du verre trop importante, si bien que les afficheurs ne seront plus visibles au travers de la plaque. A l'inverse, de trop faibles teneurs auront pour effet de rendre le verre trop transmissif, si bien que les éléments internes du dispositif de chauffage seront trop visibles, au détriment de l'esthétique du produit.

La teneur pondérale en CoO varie de préférence de 0,03 à 0,05%, notamment de 0,035 à 0,045%. Comme pour l'oxyde de fer, la quantité de cobalt doit être judicieusement dosée afin de pouvoir dissimuler correctement les éléments internes du dispositif tout en permettant une bonne visualisation des afficheurs.

La teneur pondérale en sélénium est de préférence d'au plus 0,0020%, notamment 0,0010% et même 0,0005%, voire nulle. Cet élément est en effet fortement volatile et provoque des envols importants dans les fours verriers.

La teneur pondérale en Cr₂O₃ est avantageusement d'au plus 0,05%, notamment 0,02% et même 0,01%, voire nulle (à l'exception toutefois d'impuretés inévitables, provenant par exemple de la corrosion de réfractaires présents dans le four de fusion), pour des raisons à la fois liées au risque toxicologique du chrome et à sa faible fusibilité, pouvant entraîner la présence d'infondus d'oxyde de chrome.

De préférence, les agents colorants cités (Fe₂O₃, CoO, optionnellement Se, TiO₂, SnO₂, et Cr₂O₃), sont les seuls agents colorants présents dans le verre.

L'oxyde de titane (TiO₂) pouvant conduire, en combinaison avec l'oxyde de fer, à l'obtention de couleurs jaunes ou ambres, et donc à une distorsion des couleurs des afficheurs, sa teneur pondérale est avantageusement d'au plus 1%, voire 0,5%, et même nulle, sauf impuretés inévitables.

La composition chimique du verre peut également comprendre d'autres colorants, tels que NiO, des sulfures ou encore des oxydes de lanthanides, mais de préférence elle n'en comprend pas, pour des raisons liées à l'environnement et à l'hygiène industrielle, ou encore des raisons de coût.

Le facteur de transmission lumineuse des plaques de verre, pour une épaisseur de 4 mm et au sens de la norme EN 410 :1998, est de préférence d'au plus 10%, notamment 8% et même 5% ou encore 4% ou 3%. Il est de préférence d'au moins 0,2%, notamment 0,5% et même 1,0%.

Le choix spécifique des agents colorants et de leurs teneurs permet généralement d'obtenir un spectre en transmission remarquablement plat dans le domaine visible. De préférence, le rapport entre la transmission pour une longueur d'onde de 630 nm et la transmission pour une longueur d'onde de 430 nm est compris entre 0,3 et 3, notamment entre 0,5 et 2, voire entre 0,7 et 1,5, et même entre 1,0 et 1,5. Avantageusement, la courbe de transmission est telle que le rapport entre la transmission la plus élevée et la transmission la plus faible dans le domaine de longueurs d'onde allant de 430 nm à 630 nm est d'au plus 3, notamment d'au plus 2 et même d'au plus 1,5.

Les coordonnées colorimétriques a* et b* sont avantageusement comprises chacune dans un domaine allant de -5 à +5, pour une épaisseur de 4 mm et en prenant en compte l'illuminant D65 et l'observateur de référence CIE 1931 au sens des normes ISO 11664-1 et -2.

Les plaques peuvent être fabriquées de manière connue par fusion de matières premières pulvérulentes puis formage du verre obtenu. La fusion est typiquement réalisée dans des fours réfractaires à l'aide de brûleurs utilisant comme comburant de l'air ou, mieux, de l'oxygène, et comme combustible du gaz naturel ou du fioul. Des résistances en molybdène ou en platine immergées dans le verre en fusion peuvent également apporter toute ou partie de l'énergie utilisée pour obtenir un verre fondu. Des matières premières (silice, borax, colémanite, alumine hydratée, calcaire, dolomie etc.) sont introduites dans le four et subissent sous l'effet des hautes températures diverses réactions chimiques, telles que des réactions de décarbonatation, de fusion proprement dite... La température maximale atteinte par le verre est typiquement d'au moins 1500°C, notamment comprise entre 1600 et 1700°C. Le formage du verre en plaques peut se faire de manière connue par laminage du verre entre des rouleaux métalliques ou céramiques, ou encore par flottage, technique consistant à déverser le verre fondu sur un bain d'étain en fusion.

Outre la plaque en verre et au moins un inducteur (de préférence trois voire quatre et même cinq), le dispositif de cuisson peut comprendre au moins un dispositif émettant de la lumière, au moins un dispositif de commande et de contrôle, l'ensemble étant compris dans un caisson.

Un, le ou chaque dispositif émettant de la lumière est avantageusement choisi parmi les diodes électroluminescentes (par exemple faisant partie d'afficheurs à 7 segments), les afficheurs à cristaux liquides (LCD), à diodes électroluminescentes, éventuellement organiques (OLED), les afficheurs fluorescents (VFD). Le dispositif de cuisson comprend de préférence au moins un dispositif émettant de la lumière blanche. Les couleurs vues au travers de la plaque sont diverses : rouge, vert, bleu, et toutes les combinaisons possibles, dont le jaune, le violet, le blanc... Ces dispositifs émettant de la lumière peuvent être purement décoratifs, par exemple séparer visuellement différentes zones de la plaque. Le plus souvent toutefois ils auront un rôle fonctionnel en affichant diverses informations utiles pour l'utilisateur, notamment indication de la puissance de chauffe, de la température, de programmes de cuisson, de temps de cuisson, de zones de la plaque dépassant une température prédéterminée.

Les dispositifs de commande et de contrôle comprennent généralement des touches sensitives, par exemple du type capacitif ou à infrarouge.

L'ensemble des éléments internes est généralement fixé à un caisson, souvent métallique, qui constitue donc la partie inférieure du dispositif de cuisson, normalement dissimulé dans le plan de travail ou dans le corps de la cuisinière.

Afin de parfaire l'aspect optique de l'ensemble, il est possible de disposer sous la plaque de verre des matériaux opaques ou réfléchissants, tels que par exemple des feuilles de mica.

La plaque peut également comporter un décor en face supérieure, généralement en émail, dont la fonction est décorative. Le décor permet généralement d'identifier les zones de chauffe (par exemple en les représentant sous forme de cercle), les zones de commande (notamment les touches sensitives), d'apporter des informations, ou encore de représenter un logo.

L'émail est formé à partir d'une poudre comprenant une fritte de verre et des pigments (ces pigments pouvant également faire partie de la fritte), et d'un médium pour l'application sur le substrat. La fritte de verre est de préférence obtenue à partir d'un mélange vitrifiable comprenant généralement des oxydes choisis notamment parmi les oxydes de silicium, de zinc, de sodium, de bore, de lithium, de potassium, de calcium, d'aluminium, de magnésium, de baryum, de strontium, d'antimoine, de titane, de zirconium, de bismuth. Des frittes de verre particulièrement adaptées sont décrites dans les demandes FR 2782318 ou WO 2009/092974. Les pigments peuvent être choisis parmi les composés contenant des oxydes métalliques tels que des oxydes de chrome, de cuivre, de fer, de cobalt, de nickel, etc, ou peuvent être choisis parmi les chromates de cuivre ou de cobalt, etc, le taux de pigment(s) dans l'ensemble fritte(s)/pigment(s) étant par exemple compris entre 30 et 60 % en poids. La couche d'émail peut être notamment déposée par sérigraphie (la base et les pigments étant le cas échéant mis en suspension dans un médium approprié généralement destiné à se consumer dans une étape de cuisson ultérieure, ce médium pouvant notamment comporter des solvants, des diluants, des huiles, des résines, etc), l'épaisseur de la couche étant par exemple de l'ordre de 1 à 6 µm.

Les exemples qui suivent illustrent l'invention sans toutefois la limiter.

Différents verres, dont la composition chimique est récapitulée dans les tableaux 1 et 2 ci-après, ont été fondus par des techniques connues et mis en forme de plaques. Les teneurs indiquées dans ce tableau sont exprimées en pourcentages pondéraux, et la teneur en Fe₂O₃ correspond à la teneur en fer total.

**Tableau 1**

| | 1 | 2 | 3 | 4 | 5 |
|---|---|---|---|---|---|
| SiO₂ | 65,8 | 65,8 | 78,4 | 65.8 | 78,2 |
| Al₂O₃ | 19,9 | 19,9 | 2,5 | 19,9 | 2,5 |
| B₂O₃ | | | 13,0 | | 13,0 |
| Na₂O | 0,2 | 0,2 | 3,4 | 0,2 | 3,4 |
| K₂O | 0,2 | 0,2 | 0,6 | 0,2 | 0,6 |
| Li₂O | 3,5 | 3,5 | | 3,5 | |
| MgO | 1,2 | 1,2 | | 1,2 | |
| BaO | 0,8 | 0,8 | | 0,8 | |
| ZnO | 1,7 | 1,7 | | 1,7 | |
| TiO₂ | 2,6 | 2,6 | | 2,6 | |
| ZrO₂ | 1,7 | 1,7 | | 1,7 | |
| SnO₂ | 0,3 | 0,3 | | 0,3 | |
| Fe₂O₃ | 1,06 | 1,06 | 1,13 | 1,27 | 1,36 |
| FeO | 0,57 | 0,68 | 0,25 | 0,82 | 0,37 |
| Se | <0,0005 | <0,0005 | <0,0005 | <0,0005 | <0,0005 |
| CoO | 0,0355 | 0,0397 | 0,0427 | 0,0413 | 0,0407 |
| Cr₂O₃ | 0,0730 | <0,0003 | <0,0003 | <0,0003 | 0,0005 |

**Tableau 2**

| | 6 | 7 | 8 | 9 |
|---|---|---|---|---|
| SiO₂ | 78,2 | 78,4 | 65,8 | 67,8 |
| Al₂O₃ | 2,5 | 2,5 | 19,9 | 22,9 |
| B₂O₃ | 13,0 | 13,0 | | |
| Na₂O | 3,4 | 3,4 | 0,2 | 0,6 |
| K₂O | 0, 6 | 0, 6 | 0,2 | 0,3 |
| Li₂O | | | 3,5 | 3,9 |
| MgO | | | 1,2 | 0,4 |
| CaO | | | | 0,5 |
| BaO | | | 0,8 | 2,1 |
| ZnO | | | 1,7 | 1,6 |
| TiO₂ | | | 2,6 | 0 |
| ZrO₂ | | | 1,7 | 0 |
| SnO₂ | | | 0,3 | 0,3 |
| Fe₂O₃ | 1,58 | 1,20 | 1,19 | 1,14 |
| FeO | 0,40 | 0,25 | 0,704 | 0,659 |
| Se | <0,0005 | <0,0005 | <0,0005 | <0,0005 |
| CoO | 0,0420 | 0,0500 | 0,0400 | 0,0500 |
| Cr₂O₃ | 0,0007 | <0,0003 | <0,0003 | <0,0003 |

Les exemples 1, 2, 4, 8 et 9 sont des verres de type aluminosilicate de lithium, tandis que les verres 3, 5, 6 et 7 sont des verres de type borosilicate.

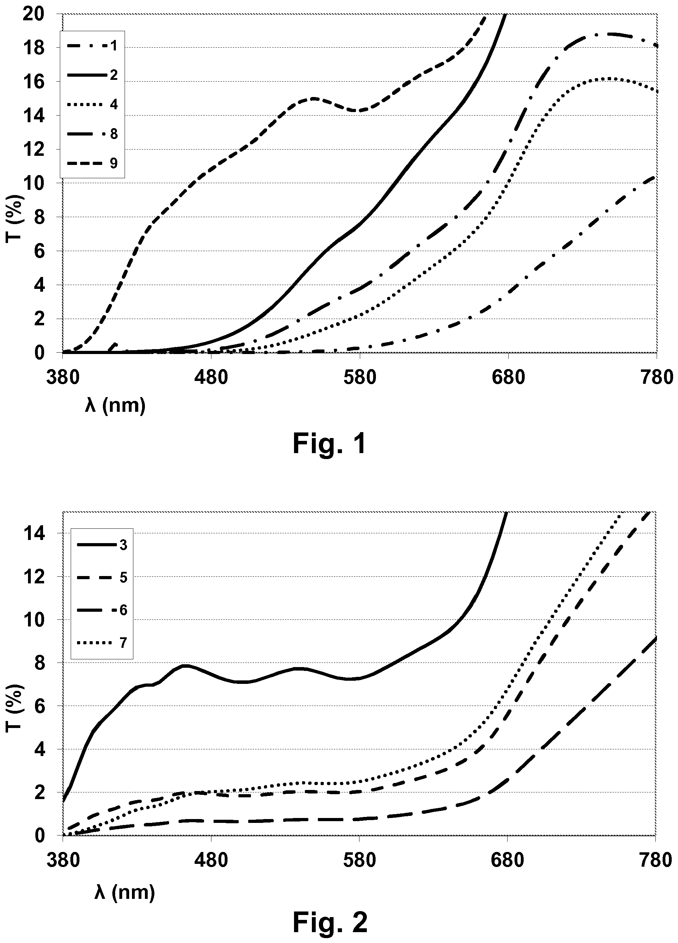

Les Figures 1 et 2 reproduisent les spectres en transmission dans le domaine du visible respectivement des verres de type aluminosilicate de lithium et des verres de type borosilicate. Dans ces figures, le terme λ désigne la longueur d'onde, et T la transmission.

Les tableaux 3 et 4 ci-après indiquent pour chacun des verres les caractéristiques et propriétés optiques suivantes :
- l'épaisseur e des plaques exprimée en mm,
- le facteur de transmission lumineuse au sens de la norme EN410 :1998, noté « TL »,
- les coordonnées colorimétriques L*,a*,b* en prenant en compte l'illuminant D65 et l'observateur de référence CIE 1931 au sens des normes ISO 11664-1 et -2,
- les transmissions pour une longueur d'onde de 430, 530 et 630 nm.

**Tableau 3**

| | 1 | 2 | 3 | 4 | 5 |
|---|---|---|---|---|---|
| e (mm) | 3,9 | 4,1 | 3,9 | 4,1 | 4,1 |
| TL (%) | 0,3 | 6, 0 | 7,7 | 1,8 | 2,1 |
| L* | 0,2 | 29,5 | 33,3 | 14,2 | 16,1 |
| a* | 17,2 | 15,5 | 2,7 | 18,6 | 3,5 |
| b* | 16,9 | 48,0 | 1,5 | 38,0 | 3,1 |
| T (430nm) | 0 | 0 | 6,9 | 0 | 1,6 |
| T (530nm) | 0,02 | 3,5 | 7,6 | 0,6 | 2,0 |
| T (630nm) | 1,23 | 12,8 | 9,0 | 5,2 | 2,9 |

**Tableau 4**

| | 6 | 7 | 8 | 9 |
|---|---|---|---|---|
| e (mm) | 4,1 | 4,1 | 4,1 | 4,1 |
| TL (%) | 0,8 | 2, 6 | 2, 9 | 14,4 |
| L* | 7,1 | 18,1 | 19,9 | 44,8 |
| a* | 3,4 | 2,8 | 15,6 | -1,7 |
| b* | 3,7 | 8,2 | 41,6 | 16,3 |
| T (430nm) | 0,5 | 1,2 | 0,0 | 6,2 |
| T (530nm) | 0,7 | 2,4 | 1,5 | 14,3 |
| T (630nm) | 1,2 | 3,6 | 7,0 | 16,8 |

L'aspect des verres obtenus est très proche de celui de la vitrocéramique KeraBlack commercialisée par la Demanderesse. Les verres permettent en outre une bonne visualisation des afficheurs blancs. Cette visualisation est même excellente dans le cas des exemples 3, 5, 6, 7 (de type borosilicate) et 9 (de type aluminosilicate de lithium), qui présentent une courbe de transmission remarquablement plate dans le domaine du visible. Pour ces exemples, la couleur blanche d'afficheurs à LED est parfaitement rendue. Pour les autres exemples la couleur blanche est légèrement teintée de jaune ou d'orange.

De par leurs propriétés avantageuses (c/a, E.α, températures inférieures de recuit, coefficient de dilatation thermique) ces compositions se prêtent en outre, après un renforcement approprié, à une utilisation dans des dispositifs de cuisson par induction, en satisfaisant les tests les plus sévères, notamment les tests visant à évaluer la résistance au choc thermique après endommagement.

## Revendications

1. Plaque en verre renforcé de type aluminosilicate de lithium, borosilicate ou alumino-borosilicate pour un dispositif de cuisson par induction, dont la composition chimique comprend les colorants suivants, dans une teneur variant dans les limites pondérales ci-après définies :
| | |
|---|---|
| Fe₂O₃ (fer total) | 0,8 à 1,8% |
| CoO | 0,02 à 0,06% |
| Se | 0 à 0,005% |
| Cr₂O₃ | 0 à 0,1%. |

2. Plaque en verre selon la revendication 1, telle que le coefficient de dilatation thermique linéaire du verre est d'au plus 50.10⁻⁷/K, notamment est compris entre 30 et 45.10⁻⁷/K.

3. Plaque en verre selon la revendication précédente, telle que la composition chimique du verre comprend de la silice SiO₂ en une teneur pondérale allant de 49 à 75%, de l'alumine Al₂O₃ en une teneur pondérale allant de 15 à 30% et de l'oxyde de lithium Li₂O en une teneur pondérale allant de 1 à 8%.

4. Plaque en verre selon la revendication précédente, telle que la composition chimique du verre comprend les constituants suivants, variant dans les limites pondérales ci-après définies :
| | |
|---|---|
| SiO₂ | 49-75%, notamment 52-75% |
| Al₂O₃ | 15-30%, notamment 18-27% |
| Li₂O | 1-8%, notamment 2,5-5,5% |
| K₂O | 0-5%, notamment 0-3% |
| Na₂O | 0-5%, notamment 0-3% |
| ZnO | 0-5%, notamment 0-3,5% |
| MgO | 0-5%, notamment 0-3% |
| CaO | 0-5%, notamment 0-2,5% |
| BaO | 0-5%, notamment 0-3,5% |
| SrO | 0-5%, notamment 0-2% |
| TiO₂ | 0-6%, notamment 0-3% |
| ZrO₂ | 0-5%, notamment 0-3% |
| P₂O₅ | 0-10%, notamment 0-8% |
| B₂O₃ | 0-5%, notamment 0-3%. |

5. Plaque en verre selon l'une des revendications 1 et 2, telle que la composition chimique du verre comprend de la silice SiO₂ en une teneur pondérale allant de 70 à 85%, de l'oxyde de bore B₂O₃ en une teneur pondérale allant de 8% à 20% et au moins un oxyde alcalin, la teneur pondérale totale en oxydes alcalins allant de 1 à 10%.

6. Plaque en verre selon la revendication précédente, telle que la composition chimique du verre borosilicate comprend les constituants suivants, variant dans les limites pondérales ci-après définies :
| | |
|---|---|
| SiO₂ | 70-85% |
| B₂O₃ | 8-16% |
| Al₂O₃ | 0-5% |
| K₂O | 0-2% |
| Na₂O | 1-8%. |

7. Plaque en verre selon l'une des revendications 1 et 2 telle que la composition chimique du verre du type alumino-borosilicate comprend de la silice SiO₂ en une teneur pondérale allant de 45% à 68%, de l'alumine Al₂O₃ en une teneur pondérale allant de 8 à 20%, de l'oxyde de bore B₂O₃ en une teneur pondérale allant de 4% à 18%, des oxydes alcalino-terreux choisis parmi MgO, CaO, SrO et BaO, en une teneur totale allant de 5 à 30%, la teneur pondérale totale en oxydes alcalins ne dépassant pas 10%, notamment 1%.

8. Plaque en verre selon l'une des revendications précédentes, telle que la teneur pondérale en Fe₂O₃ (fer total) varie de 0,9 à 1,7%.

9. Plaque en verre selon l'une des revendications précédentes, telle que la teneur pondérale en CoO varie de 0,03 à 0,05%.

10. Plaque en verre selon l'une des revendications précédentes, telle que la teneur pondérale en Cr₂O₃ est nulle.

11. Plaque en verre selon l'une des revendications précédentes, telle que la teneur pondérale en TiO₂ est d'au plus 1%, notamment 0,5%.

12. Plaque en verre selon l'une des revendications précédentes, telle que le verre est renforcé thermiquement.

13. Dispositif de cuisson par induction comprenant au moins un inducteur disposé sous une plaque en verre selon l'une des revendications précédentes.

14. Dispositif de cuisson selon la revendication précédente, comprenant au moins un dispositif émettant de la lumière blanche.

## Patentansprüche

1. Verstärkte Glasplatte des Typs Lithium-Aluminiumsilikat, Borosilikat oder Aluminium-Borosilikat für eine Induktionskochvorrichtung, deren chemische Zusammensetzung die folgenden Farbstoffe umfasst, deren Gehalt innerhalb der nachstehend definierten Gewichtsgrenzen variiert:
| | |
|---|---|
| Fe₂O₃ (Gesamteisen) | 0,8 bis 1,8 % |
| CoO | 0,02 bis 0,06 % |
| Se | 0 bis 0,005 % |
| Cr₂O₃ | 0 bis 0,1 %. |

2. Glasplatte nach Anspruch 1, wobei der lineare Wärmeausdehnungskoeffizient des Glases höchstens 50,10⁻⁷/K beträgt, insbesondere zwischen 30 und 45,10⁻⁷/K liegt.

3. Glasplatte nach dem vorhergehenden Anspruch, wobei die chemische Zusammensetzung des Glases Silicium SiO₂ mit einem Gewichtsanteil von 49 bis 75 %, Aluminiumoxid Al₂O₃ mit einem Gewichtsanteil von 15 bis 30 % und Lithiumoxid Li₂O mit einem Gewichtsanteil von 1 bis 8 % umfasst.

4. Glasplatte nach dem vorhergehenden Anspruch, wobei die chemische Zusammensetzung des Glases die folgenden Bestandteile umfasst, die innerhalb der nachstehend definierten Gewichtsgrenzen variieren:
| | |
|---|---|
| SiO₂ | 49-75 %, insbesondere 52-75 % |
| Al₂O₃ | 15-30 %, insbesondere 18-27 % |
| Li₂O | 1-8 %, insbesondere 2,5-5,5 % |
| K₂O | 0-5 %, insbesondere 0-3 % |
| Na₂O | 0-5 %, insbesondere 0-3 % |
| ZnO | 0-5 %, insbesondere 0-3,5 % |
| MgO | 0-5 %, insbesondere 0-3 % |
| CaO | 0-5 %, insbesondere 0-2,5 % |
| BaO | 0-5 %, insbesondere 0-3,5 % |
| SrO | 0-5 %, insbesondere 0-2 % |
| TiO₂ | 0-6 %, insbesondere 0-3 % |
| ZrO₂ | 0-5 %, insbesondere 0-3 % |
| P₂O₅ | 0-10 %, insbesondere 0-8 % |
| B₂O₃ | 0-5 %, insbesondere 0-3 %. |

5. Glasplatte nach einem der Ansprüche 1 und 2, wobei die chemische Zusammensetzung des Glases Silicium SiO₂ mit einem Gewichtsanteil von 70 bis 85 %, Boroxid B₂O₃ mit einem Gewichtsanteil von 8 bis 20 % und mindestens ein Alkalioxid umfasst, wobei der Gesamtgewichtsanteil an Alkalioxiden von 1 bis 10 % reicht.

6. Glasplatte nach dem vorhergehenden Anspruch, wobei die chemische Zusammensetzung des Borosilikatglases die folgenden Bestandteile umfasst, die innerhalb der nachstehend definierten Gewichtsgrenzen variieren:
| | |
|---|---|
| SiO₂ | 70-85 % |
| B₂O₃ | 8-16 %, |
| Al₂O₃ | 0-5 % |
| K₂O | 0-2 % |
| Na₂O | 1-8 %. |

7. Glasplatte nach einem der Ansprüche 1 und 2, wobei die chemische Zusammensetzung des Glases des Typs Aluminiumborosilikat Silicium SiO₂ mit einem Gewichtsanteil von 45 % bis 68 %, Aluminiumoxid Al₂O₃ mit einem Gewichtsanteil von 8 bis 20 %, Boroxid B₂O₃ mit einem Gewichtsanteil von 4 % bis 18 % umfasst, wobei die Erdalkalioxide ausgewählt sind aus MgO, CaO, SrO und BaO, mit einem Gesamtanteil von 5 bis 30 %, wobei der Gesamtgewichtsanteil an Alkalioxiden 10 %, insbesondere 1 %, nicht überschreitet.

8. Glasplatte nach einem der vorhergehenden Ansprüche, wobei der Gewichtsanteil an Fe₂O₃ (Gesamteisen) von 0,9 bis 1,7 % variiert.

9. Glasplatte nach einem der vorhergehenden Ansprüche, wobei der Gewichtsanteil an CoO zwischen 0,03 und 0,05 % variiert.

10. Glasplatte nach einem der vorhergehenden Ansprüche, wobei der Gewichtsanteil an Cr₂O₃ null beträgt.

11. Glasplatte nach einem der vorhergehenden Ansprüche, wobei der Gewichtsanteil an TiO₂ höchstens 1 %, insbesondere 0,5 %, beträgt.

12. Glasplatte nach einem der vorhergehenden Ansprüche, wobei das Glas thermisch verstärkt ist.

13. Induktionskochvorrichtung, umfassend mindestens einen unter einer Glasplatte angeordneten Induktor nach einem der vorhergehenden Ansprüche.

14. Kochvorrichtung nach dem vorhergehenden Anspruch, umfassend mindestens eine Vorrichtung, die weißes Licht emittiert.

## Claims

1. A plate made of strengthened glass of the lithium aluminosilicate, borosilicate or alumino-borosilicate type for an induction cooking appliance, the chemical composition of which comprises the following colorants, in a content varying within the limits by weight defined below:
| | |
|---|---|
| Fe₂O₃ (total iron) | 0.8 to 1.8% |
| CoO | 0.02 to 0.06% |
| Se | 0 to 0.005% |
| Cr₂O₃ | 0 to 0.1%. |

2. The glass plate as claimed in claim 1, such that the linear thermal expansion coefficient of the glass is at most 50×10⁻⁷/K and is especially comprised between 30 and 45×10⁻⁷/K.

3. The glass plate as claimed in the preceding claim, such that the chemical composition of the glass comprises silica SiO₂ in a content by weight ranging from 49 to 75%, alumina Al₂O₃ in a content by weight ranging from 15 to 30% and lithium oxide Li₂O in a content by weight ranging from 1 to 8%.

4. The glass plate as claimed in the preceding claim, such that the chemical composition of the glass comprises the following constituents, varying within the limits by weight defined below:
| | |
|---|---|
| SiO₂ | 49-75%, especially 52-75% |
| Al₂O₃ | 15-30%, especially 18-27% |
| Li₂O | 1-8%, especially 2.5-5.5% |
| K₂O | 0-5%, especially 0-3% |
| Na₂O | 0-5%, especially 0-3% |
| ZnO | 0-5%, especially 0-3.5% |
| MgO | 0-5%, especially 0-3% |
| CaO | 0-5%, especially 0-2.5% |
| BaO | 0-5%, especially 0-3.5% |
| SrO | 0-5%, especially 0-2% |
| TiO₂ | 0-6%, especially 0-3% |
| ZrO₂ | 0-5%, especially 0-3% |
| P₂O₅ | 0-10%, especially 0-8% |
| B₂O₃ | 0-5%, especially 0-3%. |

5. The glass plate as claimed in one of claims 1 and 2, such that the chemical composition of the glass comprises silica SiO₂ in a content by weight ranging from 70 to 85%, boron oxide B₂O₃ in a content by weight ranging from 8% to 20% and at least one alkali-metal oxide, the total content by weight of alkali-metal oxides ranging from 1 to 10%.

6. The glass plate as claimed in the preceding claim, such that the chemical composition of the borosilicate glass comprises the following constituents, varying within the limits by weight defined below:
| | |
|---|---|
| SiO₂ | 70-85% |
| B₂O₃ | 8-16% |
| Al₂O₃ | 0-5% |
| K₂O | 0-2% |
| Na₂O | 1-8%. |

7. The glass plate as claimed in one of claims 1 and 2, such that the chemical composition of the alumino-borosilicate glass comprises silica SiO₂ in a content by weight ranging from 45% to 68%, alumina Al₂O₃ in a content by weight ranging from 8 to 20%, boron oxide B₂O₃ in a content by weight ranging from 4% to 18%, and alkaline-earth oxides, chosen from MgO, CaO, SrO and BaO, in a total content ranging from 5 to 30%, the total content by weight of alkali-metal oxides not exceeding 10% and especially 1%.

8. The glass plate as claimed in one of the preceding claims, such that the content by weight of Fe₂O₃ (total iron) varies from 0.9 to 1.7%.

9. The glass plate as claimed in one of the preceding claims, such that the content by weight of CoO varies from 0.03 to 0.05%.

10. The glass plate as claimed in one of the preceding claims, such that the content by weight of Cr₂O₃ is zero.

11. The glass plate as claimed in one of the preceding claims, such that the content by weight of TiO₂ is at most 1% and especially 0.5%.

12. The glass plate as claimed in one of the preceding claims, such that the glass is thermally strengthened.

13. An induction cooking appliance comprising at least one inductor placed under a glass plate according to one of the preceding claims.

14. The cooking appliance according to the preceding claim, comprising at least one device that emits white light.
